(19) Europäisches Patentamt
European Patent Office
Office européen des brevets

(11) Veröffentlichungsnummer: **0 347 886**
**A2**

(12) # EUROPÄISCHE PATENTANMELDUNG

(21) Anmeldenummer: **89111312.8**

(22) Anmeldetag: **21.06.89**

(51) Int. Cl.⁴: **G11B 23/023**

(30) Priorität: **21.06.88 DE 3820944**

(43) Veröffentlichungstag der Anmeldung:
**27.12.89 Patentblatt 89/52**

(84) Benannte Vertragsstaaten:
**AT BE CH DE ES FR GB GR IT LI NL SE**

(71) Anmelder: **Schweizer, E. Hansjörg**
**Stollbergstrasse 6**
**D-8000 München 22(DE)**

(72) Erfinder: **Schweizer, E. Hansjörg**
**Stollbergstrasse 6**
**D-8000 München 22(DE)**

(74) Vertreter: **Tiedtke, Harro, Dipl.-Ing. et al**
**Patentanwaltsbüro Tiedtke-Bühling-Kinne-**
**Grupe-Pellmann-Grams-Struif-Winter-Roth**
**Bavariaring 4**
**D-8000 München 2(DE)**

(54) **Aufhänger für Hängeregistraturgestelle mit horizontalen Hängeleisten.**

(57) Ein Aufhänger für Hängeregistraturgestelle mit horizontalen Hängeleisten, der insbesondere für Magnetbandkassettenboxen geeignet ist, weist einen halboffenen Haken auf. Der Hakenbeuge des Hakens gegenüber ist mit Abstand ein Gegenhalter ausgebildet, der eine stabile Hängelage der Magnetbandkassettenbox im Hängeregistraturgestell gewährleistet.

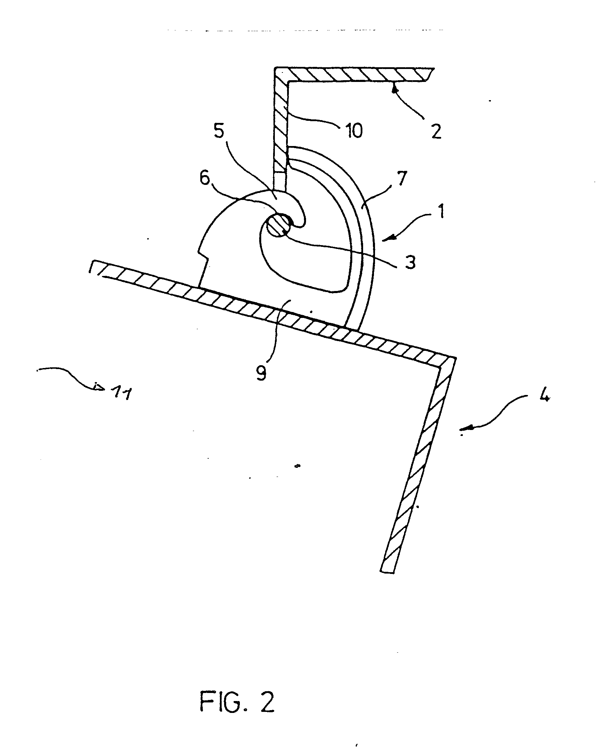

. FIG. 2

EP 0 347 886 A2

## Aufhänger für Hängeregistraturgestelle mit horizontalen Hängeleisten

Die Erfindung bezieht sich auf einen Aufhänger für Hängeregistraturgestelle mit horizontalen Hängeleisten nach dem Oberbegriff des Patentanspruchs 1.

Derzeit werden in großem Ausmaß Magnetbänder als Speichermedium für Daten verwendet. Diese Magnetbänder werden in Hängeregistraturgestellen aufbewahrt. Hierzu werden die Magnetbänder einzeln in Halteringe eingefügt, die ihrerseits einen Haken aufweisen, der auf eine horizontale Hängeleiste des Hängeregistraturgestells gehängt wird.

Inzwischen wurden Magnetbandkassetten entwickelt, die den herkömmlichen Magnetbändern hinsichtlich ihrer Speicherkapazität überlegen sind und demgemäß nach und nach die herkömmlichen Magnetbänder ersetzen sollen, um bei geringerem Raumbedarf größere Datenmengen zu speichern.

Die Abmessungen einer Standardmagnetbandkassette sind wesentlich geringer als die Abmessungen eines zur Ablage eines herkömmlichen Magnetbands verwendeten Halterings. Demgemäß müssen die in vielen Registraturen vorhandenen teueren Hängeregistraturgestelle, die hinsichtlich ihrer Abmessungen an die genannten Halteringe angepaßt sind, entweder durch auf die Magnetbandkassetten zugeschnittene neue Hängeregistraturgestelle ersetzt oder durch aufwendige Umbauten derart verändert werden, daß sie zur Ablage der Magnetbandkassetten geeignet sind.

Um die vorhandenen Hängeregistraturgestelle weiter zu nutzen, wurden Magnetbandkassettenboxen entwickelt, die zur Aufnahme mehrerer Magnetbandkassetten geeignet sind und ihrerseits mit Aufhängern versehen sind, mit denen sie in die horizontalen Hängeleisten der vorhandenen Hängeregistraturgestelle eingehängt werden.

Diese Magnetbandkassettenboxen können durch einfaches Abhängen von der horizontalen Hängeleiste aus dem Hängeregistraturgestell entnommen werden, wenn eine in der entsprechenden Magnetbandkassettenbox eingesetzte Magnetbandkassette benötigt wird. Die Entnahme einer einzelnen Magnetbandkassette aus der an der Hängeleiste des Hängeregistraturgestells hängenden Magnetbandkassettenbox ist insofern schwierig, da die Magnetbandkassette mit einer geringen, aber spürbaren Kraft aus der Magnetbandkassettenbox gelöst werden muß. Bevor eine einzelne Magnetbandkassette aus der an der Hängeleiste hängenden Magnetbandkassettenbox entfernt werden kann, muß die Magnetbandkassettenbox somit mit einer Hand fixiert werden, um zu verhindern, daß die mit der anderen Hand aufgebrachte Kraft anstelle des Lösens einer Magnetbandkassette aus der Magnetbandkassettenbox eine Drehung der Magnetbandkassettenbox um die Hängeleiste bewirkt.

Der Erfindung liegt die Aufgabe zugrunde, einen Aufhänger für Hängeregistraturgestelle zu schaffen, der eine stabile Hängelage einer Magnetbandkassettenbox gewährleistet und der es ermöglicht, daß einzelne Magnetbandkassetten mit einer Hand aus einer im Hängeregistraturgestell aufgehängten Magnetbandkassettenbox entnommen werden können.

Diese Aufgabe wird durch die Merkmale im kennzeichnenden Teil des Patentanspruchs 1 gelöst. Der Gegenhalter ist derart geformt, daß er beim Einhängen in Anlage an ein Wandelement des Hängeregistraturgestells gerät und verhindert, daß sich die Magnetbandkassettenbox in ihre labile Schwerpunktruhelage einpendelt, in der ihre Gewichtskraft kein Drehmoment um die Hängeleiste ausübt. So wird die Magnetbandkassettenbox durch ihre eigene Gewichtskraft in einer stabilen Hängelage fixiert. Diese Fixierkraft sichert eine störungsfreie, ruhige Lagerung der Magnetbandkassetten und ist des weiteren als Gegenkraft ausreichend groß, um zu verhindern, daß sich die Magnetbandkassettenbox um die Hängeleiste dreht, wenn die zum Lösen einer Magnetbandkassette aus der Magnetbandkassettenbox erforderliche Kraft aufgebracht wird. Falls die Magnetbandkassettenbox insgesamt aus dem Hängeregistraturgestell entnommen werden soll, kann sie einfach ausgehängt werden. Der Abstand zwischen dem halboffenen Haken und dem Gegenhalter ist größer als der Durchmesser der Hängeleiste.

Die gemäß Patentanspruch 2 gewölbte Ausgestaltung des Gegenhalters erleichtert das Aufhängen der Magnetbandkassettenbox auf der Hängeleiste, da so Gegenhalter und Haken quasi eine Zwangsführung zur Hakenbeuge für die Hängeleiste bilden.

Die im Vergleich zum Haken wesentlich breitere Ausgestaltung des Gegenhalters gemäß Patentanspruch 3 oder 4 ermöglicht mit nur einem Aufhänger eine stabile Hängelage der Magnetbandkassettenbox, in der sich diese nicht um ihre vertikale Hauptachse drehen kann.

Die Ausgestaltung des Aufhängers mit einem Steckfuß gemäß Patentanspruch 5 und 6 ermöglicht ein einfaches Anbringen und Lösen des Aufhängers an eine bzw. von einer Magnetbandkassettenbox, die mit einem entsprechenden Steckschuh versehen ist.

Die einstückige Ausbildung des Aufhängers aus Kunststoff gemäß Patentanspruch 7 ermöglicht eine kostengünstige Herstellung.

Die Erfindung wird im folgenden anhand von Ausführungsformen unter Bezugnahme auf die Zeichnung näher erläutert. Es zeigen:

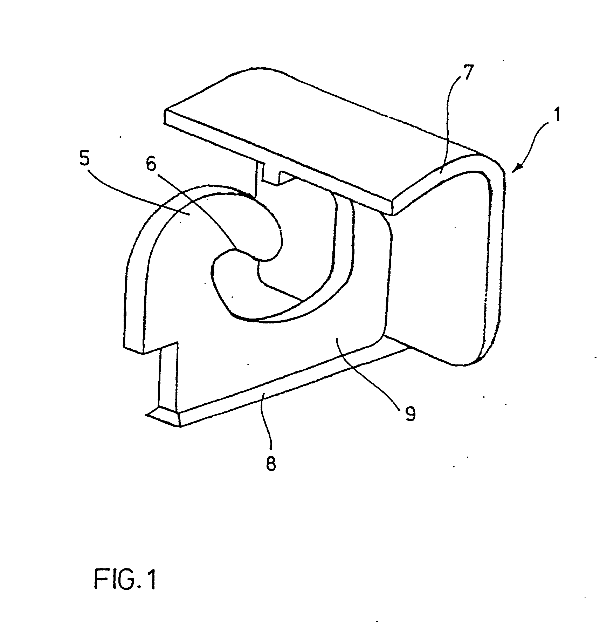

Fig. 1 eine perspektivische Darstellung einer ersten Ausführungsform des Aufhängers;

Fig. 2 einen Teilschnitt durch ein Hängeregistraturgestell in dem eine Magnetbandkassettenbox mit dem Aufhänger gemäß Fig. 1 eingehängt ist; und

Fig. 3 einen Teilschnitt durch ein Hängeregistraturgestell in dem eine Magnetbandkassettenbox mit einer zweiten Ausführungsform des Aufhängers eingehängt ist.

Ein Aufhänger 1 gliedert sich in einen halboffenen Haken 5 mit einer Hakenbeuge 6, einen Gegenhalter 7 und einen Verbindungsabschnitt 9. Die Hakenbeuge 6 ist auf der dem Gegenhalter 7 zugewandten Seite des Hakens 5 ausgebildet. Der Gegenhalter 7 ist auf den Haken 5 zu gewölbt, wobei zwischen Haken 5 und Gegenhalter 7 ein Abstand besteht, so daß der Zugang zur Hakenbeuge 6 gewährleistet ist. Haken 5 und Gegenhalter 7 sind mittels des Verbindungsabschnitts 9 einstückig verbunden. An der Unterkante des Verbindungsabschnitts 9 ist ein kufenförmiger Steckfuß 8 ausgestaltet, der im Schwalbenschwanzsitz mit einem an einer Magnetbandkassettenbox 4 vorgesehenen, nicht dargestellten Steckschuh verbindbar ist.

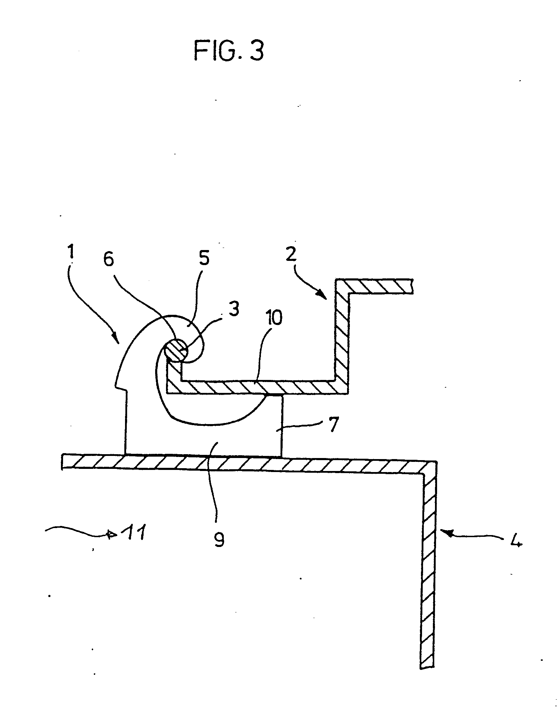

Der an der Magnetbandkassettenbox 4 angebrachte Aufhänger 1 wird an eine Hängeleiste 3 eines Hängeregistraturgestells 2 gehängt, in dem die Hakenbeuge 6 mit der Hängeleiste 3 in Eingriff gebracht wird. Läßt man die Magnetbandkassettenbox 4 nun los, dreht sich diese um die Hängeleiste 3, bis der Gegenhalter 7 an ein Wandelement 10 des Hängeregistraturgestells 2 stößt. Das Wandelement 10 kann je nach Ausgestaltung des Hängeregistraturgestells 2 vertikal, wie in Fig. 2 dargestellt, horizontal, wie in Fig. 3 dargestellt, oder in einer anderen Richtung orientiert sein. Der Gegenhalter 7 ist jeweils so geformt, daß er mit dem Wandelement 10 in Anlage gerät, bevor die Magnetbandkassettenbox ihre labile Schwerpunktruhelage erreicht; demgemäß übt die Gewichtskraft der Magnetbandkassettenbox 4 ein Drehmoment um die Hängeleiste 3 aus, durch das die Magnetbandkassette 4 in einer stabilen Hängelage fixiert wird.

Der Gegenhalter 7 ist in Richtung der Hängeleiste 3 wesentlich breiter als der Haken; somit kann eine Drehung der Magnetbandkassettenbox 4 um ihre vertikale Hauptachse auch dann verhindert werden, wenn die Magnetbandkassettenbox 4 nur mit einem Aufhänger versehen ist. Das Bezugszeichen 11 bezeichnet die offene Vorderseite der Magnetbandkassettenbox.

**Ansprüche**

1. Aufhänger für Hängeregistraturgestelle mit horizontalen Hängeleisten, insbesondere für Magnetbandkassettenboxen, gekennzeichnet durch einen halboffenen Haken (5) mit einem der Hakenbeuge (6) im Abstand gegenüberliegenden Gegenhalter (7) für eine stabile Hängelage.

2. Aufhänger nach Anspruch 1, dadurch gekennzeichnet, daß der Gegenhalter (7) dem Haken (5) zugewölbt ist.

3. Aufhänger nach Anspruch 1 oder 2, dadurch gekennzeichnet, daß der Gegenhalter (7) wesentlich breiter als der Haken (5) ist.

4. Aufhänger nach Anspruch 3, dadurch gekennzeichnet, daß der Gegenhalter (7) im Querschnitt T-Form hat.

5. Aufhänger nach einem der Ansprüche 1 bis 4, dadurch gekennzeichnet, daß der Haken (5) und der Gegenhalter (7) durch einen mit einem Steckfuß (8) ausgebildeten Verbindungsabschnitt (9) miteinander verbunden sind.

6. Aufhänger nach Anspruch 5, dadurch gekennzeichnet, daß der Steckfuß (8) Kufenform für einen Schwalbenschwanzsitz hat.

7. Aufhänger nach einem der Ansprüche 1 bis 6, dadurch gekennzeichnet, daß der Aufhänger (1) einstückig aus Kunststoff hergestellt ist.

8. Aufhänger nach einem der Ansprüche 1 bis 7, dadurch gekennzeichnet, daß der Gegenhalter (7) derart mit einem Wandelement (10) des Hängeregistraturgestells (2) in Anlage gerät, daß die mit dem Aufhänger (1) verbundene Magnetbandkassettenbox (4) in einer Hängelage fixiert wird, in der ihre Gewichtskraft ein Drehmoment um die Hängeleiste (3) ausübt.

FIG.1

FIG. 2

FIG. 3